# EUROPEAN PATENT SPECIFICATION

(11) **EP 4 313 617 B1**
(45) Date of publication and mention of the grant of the patent: **03.06.2026**
(21) Application number: 22715394.7
(22) Date of filing: 01.04.2022
(51) Int. Cl.: B60B 3/00, B60B 3/16, B60B 7/04, B60B 7/06, B60B 7/08, B60B 7/14, B60B 19/10, F16B 19/10, F16B 21/06, F16B 21/08

(54) **VEHICLE WHEEL, IN PARTICULAR FOR COMMERCIAL VEHICLES, WITH AN AERODYNAMIC COVER AND AERODYNAMIC COVER FOR VEHICLE WHEELS, IN PARTICULAR FOR COMMERCIAL VEHICLES**
FAHRZEUGRAD, INSBESONDERE FÜR NUTZFAHRZEUGE, MIT AERODYNAMISCHEM DECKEL UND AERODYNAMISCHEM DECKEL FÜR FAHRZEUGRÄDER, INSBESONDERE FÜR NUTZFAHRZEUGE
ROUE DE VÉHICULE, EN PARTICULIER POUR VÉHICULES UTILITAIRES, AYANT UN COUVERCLE AÉRODYNAMIQUE ET COUVERCLE AÉRODYNAMIQUE POUR ROUES DE VÉHICULE, EN PARTICULIER POUR VÉHICULES UTILITAIRES

(30) Priority: 02.04.2021 DE 202021101794 U
(43) Date of publication of application: 07.02.2024
(73) Proprietor: Maxion Wheels Holding GmbH, 53639 Königswinter (DE)
(72) Inventor: FANIZZA, Iosef, 53639 Königswinter (DE)
(74) Representative: Patentanwälte Buschhoff Hennicke Althaus
(86) International application number: PCT/IB2022/053062
(87) International publication number: WO 2022/208460

(56) References cited:
- US-A- 3 894 775
- US-A- 5 161 437

## Description

The invention relates to a vehicle wheel. The invention also relates to an aerodynamic wheel disc cover for a corresponding vehicle wheel.

DE 20 2018 105 357 U1 discloses a generic vehicle wheel for a commercial vehicle with an aerodynamic cover. In the case of the generic vehicle wheel, the aerodynamic cover is fastened to the front of the wheel in the area of the outer rim flange.

In the case of vehicle wheels for passenger cars, it is known to use hub caps as design elements and to attach them to the body of a metal vehicle wheel in different ways. Plug-in solutions are available where the fastening takes place directly on the bolts. And solutions are available where a tensioning device is arranged on the hub cap, which interacts in a suitable manner with a fastening device on the vehicle wheel.

US 3 894 775 A discloses a vehicle wheel as defined in the preamble of claim 1.

The object of the invention is to create vehicle wheels, in particular for commercial vehicles, which enable an aerodynamic wheel disc cover to be fastened securely and easily, and which leave the designer the greatest possible design freedom for the shape of the wheel disc cover.

This object is solved by a vehicle wheel as defined in claim 1 and by an aerodynamic wheel disc cover as defined in claim 9. The dependant claims concern particular embodiments of the wheel disc according to claim 1 or the wheel disc cover according to claim 9, respectively.

The features of claim 1, that the fastening device has several fastening holes for a wheel disc cover, which are arranged in the hub connection flange, preferably arranged symmetrically on a bolt circle around the wheel axle, wherein at least one fastening hole consists of a through hole with a hole axis, is designed symmetrically to the hole axle, has a smaller diameter on the front side of the wheel than on a rear side of the hub connection flange and forms an abutment for a detachable retaining means acting by form fit, offer advantages for the fastening of corresponding wheel disc covers to the vehicle wheel and at the same time improves the ease of assembly and the reliability of the fastening.

According to the characterizing portion of claim 1, the fastening device has several fastening holes for a wheel disc cover, which are arranged in the hub connection flange, preferably arranged symmetrically on a bolt circle around the wheel axle; at least one fastening hole can hereby consist of a through hole with a hole axis, be designed symmetrically to the hole axle, and have a smaller diameter on the front side of the wheel than on the rear side of the hub connection flange, in order to correspondingly provide an abutment for a detachable retaining means that acts by form fit.

In one embodiment of the vehicle wheel according to the invention, , at least one fastening hole can widen conically from the front side of the wheel to the rear side of the hub connection flange. Different retaining means can be securely attached in a conically widening fastening hole in order to prevent the wheel disc cover from becoming detached. In the simplest arrangement, the retaining means could consist of fastening clips or plastic expansion dowels, such as those used in the interior of vehicles for fastening panelling elements or for fastening strips or bumpers to the body of some vehicle models. For this arrangement, it is sufficient if the wheel disc cover has suitable fastening holes, in particular blind holes, for receiving and for reaching through the fastening clips or expansion dowels. However, the retaining means can also consist of elements integrated into the cover, as will be explained further below with reference to the aerodynamic wheel disc cover.

In another embodiment, at least one fastening hole can have a step between the front side of the wheel and the rear side of the hub connection flange and form a retaining projection for the retaining means with the undercut formed by the step. The retaining means can also consist of an expansion dowel here, or also of a suitable anchoring element which is integrally formed on the cover. In order to create a sufficient undercut, the larger inside diameter of the fastening hole behind the step can be at least 0.8 mm, preferably at least 1.5 mm, and particularly preferably at least 1.9 mm larger than the smaller inside diameter in front of the step.

On the vehicle wheel, all fastening holes can be designed identical to one another and be arranged symmetrically on a common bolt circle; alternatively, several fastening holes could be arranged symmetrically on a bolt circle, which have a larger diameter on the rear side of the hub connection flange than on the front side of the wheel, wherein at least one fastening hole with an internal thread could be additionally provided, which is arranged asymmetrically to the fastening holes that widen towards the rear side. This would enable a combination of a fastening screw together with expansion dowels or the like as retaining means.

In all embodiments according to the invention, it is particularly advantageous if the through holes have a maximum diameter that is smaller than the diameter of the bolt holes on the hub connection flange.

In order to be very advantageous in terms of manufacturing technology and therefore cost-effectiveness, according to another embodiment of the invention a constriction could be provided on the inner circle edge of the centre hole, with which correspondingly designed retaining means on the wheel disc cover can interact. The retaining means may consist of a somewhat flexible retaining lip with a hook projection formed on a main body of the cover and engaging behind or in this constriction. For this, an advantageous design can provide to form a groove on the inner circle edge of the centre hole, in which groove the hook projection engages the retaining lip of the cover. Another advantageous design provides that on the rear side of the hub connection flange, that is, on that surface with which a vehicle wheel is pressed and fixed in the assembled state by means of the wheel bolts on the hub of a vehicle, a free surface is created by means of a taper that offers sufficient space so that a corresponding hook projection on the cover can engage behind this free space in order to thereby achieve a possible first locking of the wheel disc cover. The taper with which the inner circle edge transitions into the rear side of the hub connection flange can preferably be set back by at least 4 mm with respect to the inside diameter of the inner circle edge on the rear side. As this first locking effected at the centre hole is not sufficient for secure fastening in case of doubt, a further locking can additionally be provided, for example via a plug connection on the wheel bolts, by means of one of the other solutions according to the invention or via locking means which interact with the outer rim flange.

In all embodiments according to the invention, the outer rim flange can have an arcuately curved locking lip on the inside of the wheel disc as an abutment for a locking projection or several locking projections on the outer circumference of an aerodynamic wheel disc cover, wherein each locking projection preferably has at least one bead for engaging the locking lip. The locking lip and the locking projection therefore form a second or additional locking means.

In a preferred design, the vehicle wheel is a vehicle wheel for commercial vehicles. In vehicle wheels for commercial vehicles, the rim shoulders in particular are designed as steep shoulders with a 15° taper. The vehicle wheels according to the invention can, in principle, be mounted both on the drive axle and on the rear axles of a commercial vehicle, even if they are provided with additional fastening holes. However, the aerodynamic wheel disc covers, which are locked via fastening holes or at the centre hole (additionally), can only be mounted in the case of locking if the vehicle wheel is mounted as a single wheel, in particular as a single wheel on the drive axle, usually the front wheel axle.

An aerodynamic wheel disc cover according to the invention, or the fastening device for the wheel disc cover, is characterized for interacting in particular with corresponding vehicle wheels of commercial vehicles in particular in that retaining means interacting with the vehicle wheel consist either of retaining means acting by form fit, which is used for engaging in or behind a constriction or a fastening hole widening towards the rear side of the hub connection flange, or that the retaining means consist of a fastening screw for screwing into a fastening hole provided with an internal thread on the hub connection flange. As already indicated above, the retaining means could in principle consist of expansion dowels or fastening clips, such as are already used in the interior of vehicles. In all aerodynamic wheel disc covers, it is advantageous at the same time if the cover main body has a locking projection or several locking projections on the outer circumference, which are respectively provided with a bead for engaging in a locking lip on the outer rim flange of the vehicle wheel. The locking projection on the outer circumference of the main body thus forms a second, additional locking and securing means for the cover on the vehicle wheel together with the locking created by means of the retaining means according to the invention. In order to create an advantageous aerodynamic effect, the cover main body is preferably designed and dimensioned to cover all the bolt holes as well as the wheel bolt screws screwed into the bolt holes.

According to a particularly preferred design, the cover main body can have several blind hole depressions with a through opening, and the retaining means consisting of fastening screws can or are pre-stressed against a bottom side of the blind hole depressions via spacer sleeves when the fastening screws are screwed into the fastening holes. The fastening screws therefore cause the cover to be locked radially further inwards on the vehicle wheel; however, as the blind hole depressions would then be open and in this respect could adversely affect the aerodynamics of the wheel disc cover, it is particularly advantageous if an additional cover ring is provided, which is provided with cams on an underside, wherein each of the cams is intended for this purpose and positioned accordingly, to engage the blind hole depressions on the main body in a form fit manner in the mounted state.

In a particularly advantageous design, the cover main body has integrally formed retaining means; in a particularly preferred design, several locking pins arranged symmetrically on a bolt circle can be formed on an underside, which pins are provided with a hook projection at their lower pin end, wherein each locking pin is preferably designed at least in two parts and the partial elements of the locking pin relative to an initial state in the radial direction can be pushed apart and/or pushed together; it is particularly preferred if each locking pin is provided with a centre hole for an actuating means for pushing the partial elements of the locking pin apart; the actuating means can also form a securing means, because as long as the locking pins are pushed apart, they cause a form-fitting locking of each locking pin in the associated fastening hole, regardless of whether the fastening hole widens conically towards the rear side or widens with a step; the conical variant has the additional advantage that demounting is also supported by the conical surface, because, during demounting, the conical taper acts in the pull-out direction and in this respect the locking pins are pushed together by interaction with the conical surface. However, the locking pins could also be shaped in such a way that they normally assume the pushed-together state due to their pre-stress and in this respect can also be dismantled at any time with a stepped bore with an undercut. In addition, the cover ring could be provided on the inside of the ring with a reversibly bendable retaining lip for engaging behind a retaining edge on an inner circumference of the main body of the wheel disc cover, because then the cover ring on the main body can also be secured against unintentional loosening in a very simple manner. The cover ring preferably fills a depression in the end face of the main body.

In the design with a centre hole inside the locking pin, it is particularly advantageous if a cover ring is additionally provided, which is provided on its underside with pins projecting over the underside, wherein each pin is intended for this purpose and is positioned accordingly in one of the centre holes of the locking pin on the main body in the mounted state. The mounting of the cover ring then not only closes those depressions via which the locking pins receive actuating or securing means, but a corresponding securing of all locking pins also takes place simultaneously. In addition, the cover ring could be provided on the inside of the ring with a reversibly bendable retaining lip for engaging behind a retaining edge on an inner circumference of the main body, in order to secure the cover ring on the main body against unintentional loosening; as in the preferred design of the wheel disc cover the integrally formed locking pins and also the cover ring are made of plastic, it can prove to be advantageous if each pin is made of metal.

For a vehicle wheel which is provided with a constriction on the inner circle edge of the centre hole, the cover main body may have a bottom side which is formed as an abutment surface on a front side of a wheel-side hub connection flange and on the bottom side is provided with a reversibly bendable retaining lip, which protrudes over the bottom side and is designed to engage in an annular groove on the inner circumference of a wheel-side centre hole of a wheel disc or to engage behind a taper on a rear side of an inner circumference of a centre hole of a wheel disc.

In all embodiments of the aerodynamic cover according to the invention, it is particularly advantageous if the cover main body and/or the cover ring are made of plastic and/or that the cover main body is provided with flow guide bodies on the outer circumference for additionally influencing the aerodynamics, in particular with flow guide bodies that are designed to reduce air turbulence.

The cover main body can in particular have a flat end face or conical end face, the end face preferably having a depression and the cover ring filling this depression and with its end face lying flush with the end face of the main body in the mounted state. In addition, the cover can be provided on the outer circumference with a ring-shaped circumferential edge web having air guide slots, which is positioned on the end face next to the outer rim flange in the mounted state. The edge web with the air guide slots then protrudes over the front side of the wheel, wherein the radially aligned air guide slots can not only ensure the necessary cooling of the brakes, but can also minimize turbulence.

Further advantages and designs of a vehicle wheel according to the invention or an aerodynamic wheel disc cover according to the invention will be apparent from the following description of exemplary embodiments shown in the drawing as examples.

In the drawings:
- **Fig. 1**: schematically shows a perspective view of a vehicle wheel not according to the invention with a mounted aerodynamic wheel disc cover, partially broken open, according to a first embodiment for the cover, vehicle wheel and fastening device or retaining means;
- **Fig. 2**: shows a detailed view of the vehicle wheel from figure 1 in an exploded depiction of the cover, vehicle wheel and retaining means according to the first embodiment;
- **Fig. 3**: shows a detailed view similar to figure 2 in the mounted state of the cover, the vehicle wheel and the retaining means;
- **Fig. 4**: schematically shows a perspective view of a vehicle wheel according to the invention with a mounted aerodynamic wheel disc cover, partially broken open, according to a second embodiment for the vehicle wheel, cover and fastening device or retaining means;
- **Fig. 5**: shows a detailed view, partially in section, of the vehicle wheel with the cover according to FIG. 4;
- **Fig. 6**: shows a detailed view of the vehicle wheel, cover and fastening device according to the second embodiment in an exploded view;
- **Fig. 7**: shows an enlarged detailed view from figure 5;
- **Fig. 8**: shows a schematic, exploded detailed view of a fastening device for a wheel disc cover on a vehicle wheel according to a third embodiment variant;
- **Fig. 9**: shows a schematic side sectional view of a partial section of a vehicle wheel with a mounted wheel disc cover not according to the invention;
- **Fig. 10**: shows a detailed view of the locking of the cover according to figure 9 on the centre hole of the vehicle wheel according to figure 9.

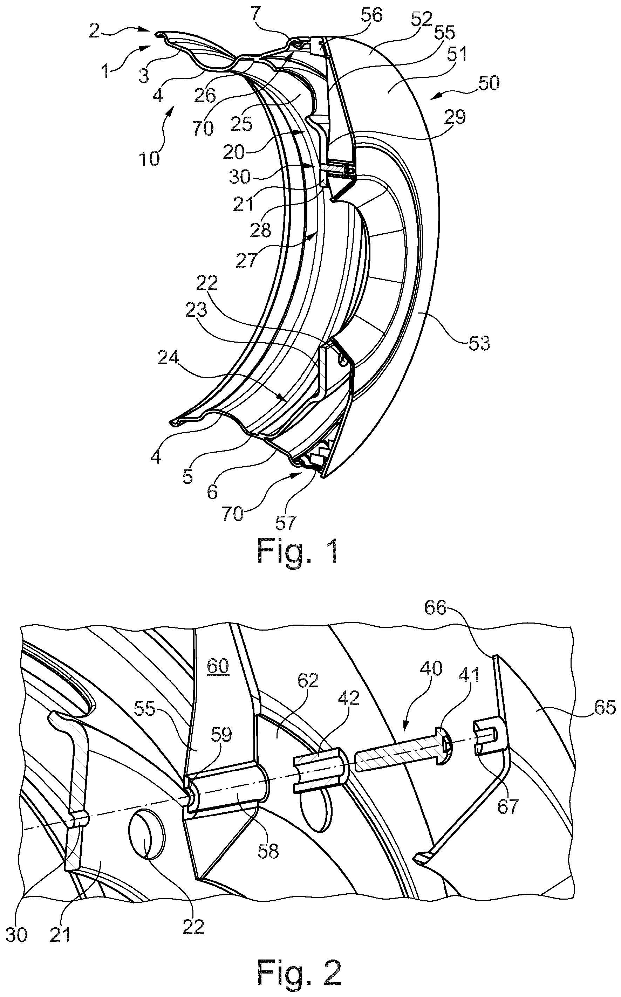

Figure 1 shows a vehicle wheel 10 according to the invention for a commercial vehicle together with a mounted wheel disc cover, designated altogether by reference numeral 50, according to a first exemplary embodiment. The vehicle wheel 10 consists, in a manner known per se, of a metal rim 1 which is adapted in terms of size, dimensions, shape and thickness for mounting on the hub of an axle, in particular the (front) drive axle of a commercial vehicle, not shown. The ring-shaped closed rim 1 accordingly has an inner rim flange 2, an inner rim shoulder 3, a rim well base 4, a transition section 5, an outer rim shoulder 6 and an outer rim flange 7. In the design of the vehicle wheel 10 or the rim 1 for a commercial vehicle, both rim shoulders 3, 6 are designed as steep shoulders with a 15° (15°-degree) angle relative to the wheel axis.

In the interior of the rim 1 is arranged a wheel disc, designated overall by reference numeral 20, which has, in the exemplary embodiment shown, in a manner known per se, a hub connection flange 21 formed concentrically around the wheel axis, which is provided with several, for example 4, 5 or 10, bolt holes 22 arranged on a bolt circle for the passage of wheel bolts, not shown, and forms the contact surface and abutment surface on the vehicle-side hub with its rear side 23. The hub connection flange 21 merges radially outwards into a transition region 24 which is provided with several ventilation holes 25 and then ends in a disc edge 26 via which the wheel disc 20 is connected to the rim, preferably by means of a welded connection. The hub connection flange 21 itself has a centre hole 27 with an inner circle edge 28. Such a design of a preferably metal, multi-part vehicle wheel is known to the person skilled in the art, which is why the possible variants for the design of the disc shape and the rim shape are not discussed here further. The vehicle wheel could also be designed in one piece and consist of aluminium, for example.

In the exemplary embodiment shown, the hub connection flange 21 protrudes axially over the plane spanned by the circumferential outer rim flange 7. The designations inner rim flange 2 and outer rim flange 7 refer to the mounting state of such a vehicle wheel on a vehicle, because then the outer rim flange 7 is on the outside, whereas the inner rim flange 2 disappears inside in the wheel housing or the like. The normally visible wheel outside of the vehicle wheel 1 is therefore essentially formed by the front side 29 of the hub connection flange 21, the transition area 24, the inside of the outer rim shoulder 6 and the inside of the outer rim flange 7. Referring to the annular rim, inside designates the radial inner side, whereas a tyre, not shown, is mounted on the radial outer side of the rim.

The outer side of the vehicle wheel 10 is almost completely covered by the aerodynamic ring-shaped wheel disc cover 50. The wheel disc cover 50 essentially extends from the centre hole 27 to the outer rim flange 7. In the exemplary embodiment according to figure 1, the wheel disc cover 50 is in several parts; it has a cover main body 51, which is preferably made of a suitable plastic, has a substantially ring-shaped basic shape and is inherently rigid. Here, the cover main body 51 has an end face 53 running conically from the outer circumference 52 radially inwards and axially outwards, and a bottom face 55 which together enclose a cavity 60.

On the outer circumference 52, a web 56 extends, which is preferably integrally or form-fit formed on the cover main body 51 and which, as can be seen particularly clearly from the lower half of figure 1, is provided with a plurality of air guide slots 57, via which air can enter the intermediate space between the bottom side 55 of the cover and the front side of the wheel disc 20, in order, for example, to ensure adequate cooling of the brakes during ongoing driving operation. Both the closed end face 53 and the air guide slots 57 on the web 56 decisively influence the aerodynamics and to this extent also the air resistance on the vehicle wheel 10 when it is mounted on a vehicle. Different designs of aerodynamic covers can be used for the present invention, as the invention essentially relates to the manner in which the wheel disc cover 50 is fastened to the vehicle wheel 1.

In the exemplary embodiment of fig. 1 as well as fig. 2 and fig. 3, to which reference is now additionally made, a special modification has been made for fastening the wheel disc cover 50 to the wheel disc 20 in that the wheel disc 20 has a plurality of fastening holes 30 arranged on a bolt circle around the wheel axis, of which, however, only a single fastening hole 30 is shown. The fastening hole 30 is provided with an internal thread, and a fastening screw 40 interacts with the fastening hole 30 as retaining means. The fastening holes 30 are arranged on a bolt circle that is similar to the bolt circle of the bolt holes 22, but the fastening holes 30 have a much smaller diameter, as figure 1 to 3 clearly show. The cover main body 51 has blind hole depressions 58 with a through hole 59 in the bottom side 55 for the arrangement of the fastening screws 40, and the blind hole depressions 58 have a cylindrical peripheral wall, which delimits the cavity 60 of the cover main body 51. The several blind hole depressions 58 distributed on a bolt circle correspond in their number and position to the number and position of the fastening holes 30 in the hub connection flange 21. Due to the depth of the blind hole depressions 58, the head 41 of the fastening screw 40 does not act directly against the bottom of the blind hole depressions 58, but is used between sleeves 42, via which the length of the fastening screw 40 can be adapted to the depth of the blind hole depressions 58. The design must be such that the screw 40 can be screwed into the threaded fastening hole 30 with a sufficient tightening torque without the threaded shank of the fastening screw 40 protruding at the rear side of the hub connection flange 21.

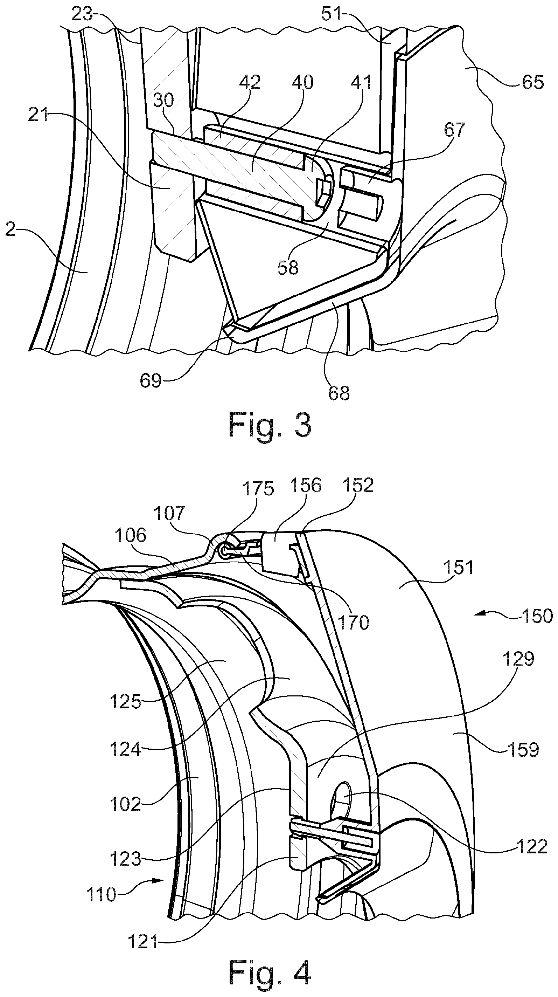

So that the blind hole depressions 58 do not impair the aerodynamics of the wheel disc cover 50, the individual blind hole depressions 58 are arranged in a region of the main body 51 which is recessed with respect to the end face 53. This resulting depression 61 can in turn be covered by a cover ring 65, which in the exemplary embodiment shown is additionally provided on its underside 66 with a circular cam 67 for each blind hole depression 58, which is designed and adapted to dip into the blind hole depressions 58 in the mounted state, as can be seen particularly well in figure 3. A retaining force for the cover ring 65 can be generated by means of a suitable clearance or transition fit between the outer circumference of the cam 67 and the inner circumference of the blind hole depressions 58. For additional locking of the cover ring 65 on the main body 51, the cover ring 65 is provided with a sloping, reversibly bendable retaining lip 68 on the inside, which has an offset 69 at its lower end in order to engage behind a correspondingly positioned and formed wedge surface on the radial inner circumference of the main body 51, as can be seen particularly well from figure 3.

The fastening device formed by means of the fastening screws 40 and the threaded fastening holes 30 does not form the only locking means for the aerodynamic cover 50, because a second locking also takes place on the inside of the outer rim flange 7. The main body 51 of the wheel disc cover 50 is correspondingly provided with an additional locking device on the outer circumference 52, which has either a single, circumferential locking element 70 which engages the arcuately curved inner side of the outer rim flange 7 with a form fit body formed for example by a bead or a curvature, in order to effect locking of the cover 50 on the vehicle wheel in the region of the outer circumference of the cover 50 by form fit. However, this additional locking element does not have to be formed circumferentially, but it could also consist of several individual pieces or a plurality of individual elements directly adjoining one another. However, it is preferably a locking element that is integrally formed on the cover. The additional support and locking on the outer rim flange 7 also ensures very good centring of the wheel disc cover 50 on the vehicle wheel numeral ten.

Figures 4 to 7 show a second design of a vehicle wheel 110 with a correspondingly installed wheel disc cover 150. Functionally identical components to the previous exemplary embodiment are denoted by reference symbols increased by 100. Here, too, the outside of the vehicle wheel 110 is formed by the front side 129 of the hub connection flange 121, the transition section 124 with the ventilation holes 125, the inside of the outer rim shoulder 106 and the inside of the outer rim flange 107. The wheel disc cover 150 has essentially the same basic shape as the wheel disc cover in the previous exemplary embodiment, with an end face 153 that runs conically inwards and axially forwards and an outer circumference 152 on which a circumferential annular web 156 with air guide slots (not shown) is arranged. In figure 4, the outer locking means in the form of the locking element 170 can be seen particularly well, wherein, in the exemplary embodiment according to figure 4, the locking element 170 is additionally provided on its end face, lying axially inwards from and offset to the web 156, with a separate and replaceable bead ring 175, with which the locking element 170 engages with form fit in the locking lip formed by the inside of the outer rim flange 107.

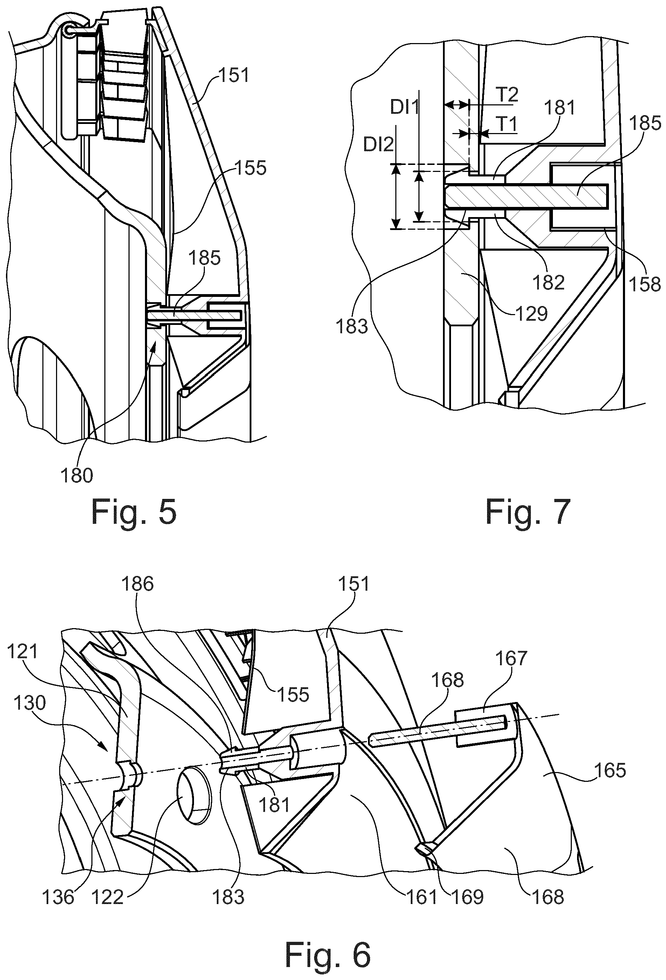

Unlike the previous embodiment, the hub connection flange 121 is provided with several mounting holes 130 here that do not have a thread but have a smaller inner diameter at the front side 129 than at the rear side 123 of the hub connection flange 121. In the exemplary embodiment according to figures 4-7, each fastening hole 130 arranged on a bolt circle around the wheel axis is provided with a step 136, as can be seen particularly well in figure 6. The dimensions of the fastening hole 130 are indicated in figure 7. The fastening hole has a smaller inside diameter D_{I1} in front of step 136 and a larger inside diameter D_{I2} behind step 136. The difference between D_{I1} and D_{I2} is preferably at least 0.8 mm, and in particular more than 1.9 mm. The undercut formed by the step 136 has only a small depth T₁ with respect to the front side 129, whereas the section with the diameter D_{I2} has a significantly greater depth T₂. The ratio of T₁/T₂ can be, for example, between 1/1 and 1/5, and is preferably between 1/2 and 1/3. The depth is at least 1.5 mm.

For the locking the wheel disc cover 150 to the stepped fastening holes 130, the main body 151 is provided with integrally formed latch pins 180 extending rearwardly beyond the bottom face 155, as can be readily seen from figures 5 to 7. Each locking pin 180 is formed in two parts and has a first flexible partial element 181 and a second flexible partial element 182 which can be pushed into one another or apart from one another. The partial elements 181, 182 of the two parts locking pin 180 are pre-stressed or pre-curved in such a way that they are normally pushed together slightly inward. The locking pin at 180 or the partial elements 181, 102 are provided with a centre hole 183, into which a preferably metal pin 185 can be inserted as an actuating element and securing element in the exemplary embodiment shown. If the pin 185 is inserted in the centre hole 183, as shown in figures 5 and 7 for example, the two partial elements 181, 182 cannot be pushed together, but rather they engage in a form-fitting manner with their hook projections 186 on the end faces of the partial elements 181, 182 of the locking pin 180 on the step 136 of the fastening hole 130. However, if the pin 185 is removed, the partial elements 181, 182 can move inward and the wheel disc cover 150 can be demounted.

Here, too, blind hole depressions 158 are formed in a depressed section 161 of the main body 151, at the front of which the locking pins 180 are formed integrally. The blind hole depressions 158 serve to receive retaining cams 167 on the underside of a cover ring 165 in a recessed manner, with which the receding recessed section 161 can be covered and filled flush with the end face 153 of the main body 151 in order to optimize the aerodynamics. The number of cams 167 with pins 185 held on the cover ring 165 by means of these is preferably adapted to the number of stepped fastening holes 130 in the hub connection flange 121. By mounting the cover ring 165, all pins 185 are inserted into the locking projections 180, and locking and securing of all retaining means is effected via the cover ring 165. In order that this is additionally anchored to the main body 151, in the exemplary embodiment according to fig. 5 to fig. 7, the cover ring 165 has a flexible retaining lip with an offset 169 in order to engage behind a correspondingly formed mating surface on the cover main body 151.

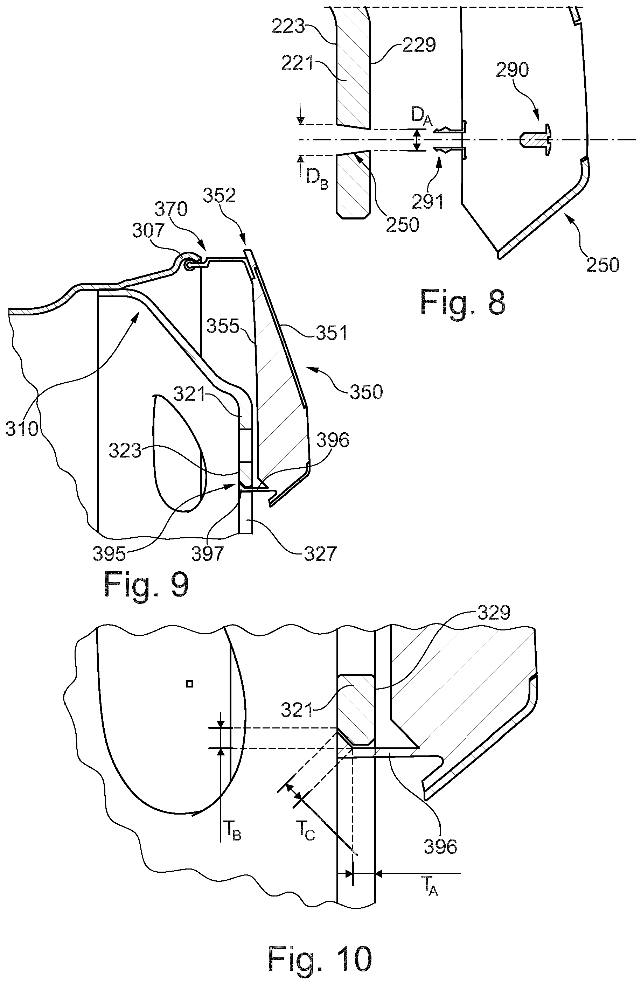

Figure 8 shows, in a very simplified schematic form, a third embodiment variant for retaining means for a cover 250. On the hub connection flange 221, only indicated, several fastening holes 230 are distributed on a bolt circle around the wheel axis, wherein each fastening hole widens conically from the front side 229 to the back side 223 of the hub connection flange 221. The ratio of the minimum diameter D_{A} on the front side 229 to the maximum diameter D_{B} on the rear side 223 can be 0.5 <DA/DB <0.85, for example, whereby the conical course forms a sufficient retention surface for retaining means engaging the conical through-holes. The retaining means could hereby be designed in exactly the same way as in the previous exemplary embodiment with corresponding multi-part locking pins, wherein the conical surface would have the advantage during disassembly that the part elements are automatically pushed together. Alternatively, a wheel disc cover 250 could also be anchored to the fastening hole 230 by means of an expansion dowel 291 and a plug-in rivet 290, which pass through a suitable through hole in the cover 250, as indicated schematically in figure 8.

Figures 9 and 10 show a fourth embodiment variant of a vehicle wheel 310 and a cover 350; this embodiment variant also has two locking surfaces or locking means that are spaced apart from one another, namely, on the one hand, a locking element 370 on the outer circumference 352 of the cover 350, which interacts with the inside of the outer rim flange 307, and also a further retaining means, which is integrally formed on the cover 350 and interacts with a constriction 395 on the inner circle edge of the centre hole 327 on the hub connection flange 321. The constriction 395 on the rear side 323 of the hub connection flange 321 is formed by means of a taper, which provides a clearance or undercut at the rear side 323 of the hub connection flange 321, as illustrated by the dimensions in figure 10. With respect to the total thickness of the wheel disc in the region of the hub connection flange 321, the beginning of the taper may have a distance T_{A} from the front side 329 of the hub connection flange 321 that is preferably approximately equal to or only slightly greater than half the total thickness of the hub connection flange. The internal offset T_{B} of the taper is preferably smaller than the distance T_{A}, whereas the total length T_{C} of the taper is longer than the distance T_{A}. By appropriately dimensioning the taper or constriction 395, the wheel disc cover 350 can be provided as the first inner locking means or retaining means of a fastening device with a flexible but sufficiently rigid retaining lip 396, which is provided with a hook projection 397 on the end face. The length of the retaining lip 396 is selected such that the retaining lip 396 protrudes rearward beyond the bottom side 355 of the wheel disc cover main body 351. The length is altogether dimensioned in such a way that the hook projection 397 dips into the constriction 395 when the wheel disc cover 350 is mounted on the vehicle wheel 310, but without hitting the front side of the hub. As the retaining lip is also ring-shaped here, the wheel disc cover 350 is additionally locked in a concentric, circumferential manner at the centre hole 327 of the vehicle wheel 310.

There is also an alternative in the fourth variant, in which the constriction is not designed by means of a taper at the transition from the inner circumference of the centre hole to the rear side of the hub connection flange of the wheel disc, but by means of a circumferential groove directly in the inner circumference of the centre hole. The retaining lip on the cover 350 would then have a somewhat shorter length so that a correspondingly designed hook projection can engage in the groove.

The following modifications are intended to fall within the scope of the appended claims. It is clear to the person skilled in the art that individual retaining means could be combined with one another in order to increase the secure locking of the aerodynamic wheel disc cover. In the exemplary embodiment shown, the offset of the wheel disc in the rim ensures that the hub connection flange clearly projects over the outer rim flange of the rim. In other designs of vehicle wheels, the hub connection flange could also lie inside the wheel, thus projecting less far than the outer rim flange when viewed axially. In such an embodiment, the wheel disc cover could then be designed flat overall and without a cone, or with an inverted cone, so that air guide slots for cooling the brakes can still be provided axially outside the outer rim flange. The air guide slots are preferably formed by such flow guide bodies which at the same time reduce the turbulence during the rotation of the vehicle wheel.

The invention has been described with reference to metal vehicle wheels. Vehicle wheels can in particular consist of light metal and be produced in one piece.

## Claims

1. Vehicle wheel, in particular for commercial vehicles, having a metal rim (1) with an inner rim flange (2) and an outer rim flange (7), an inner rim shoulder (3) and an outer rim shoulder (6) as well as a rim well base (4) between the rim shoulders (3,6), having a metal wheel disc (20) arranged inside the metal rim (1) and connected to the metal rim (1) which metal wheel disc (20) has a hub connection flange (21) with a centre hole (27) and a plurality of bolt holes (22) arranged on a bolt circle around a wheel axis, a transition area (24) and a disc edge (26), wherein the hub connection flange (21), the transition area (21), the outer rim flange (7) and the outer rim shoulder (6) form a front side (29) of the wheel, and having a fastening device for an aerodynamic wheel disc cover (50), wherein the fastening device comprises several fastening holes (30), **characterized in that** the fastening holes (130-Fig.6; 230-Fig.8) are arranged in the hub connection flange (121) and the transition area (24) is provided with ventilation holes (25), wherein at least one fastening hole (130; 230) consists of a through hole with a hole axis, is formed symmetrical to the hole axis, has a diameter (D_{I1}) on the front side (129) of the wheel being smaller than a diameter (D_{I2}) on a rear side (130) of the hub connection flange and forms an abutment for a detachable retaining means acting by form fit.

2. Vehicle wheel according to claim 1, **characterized in that** the fastening holes (130-Fig.6) are arranged symmetrically on a hole circle around the wheel axis and/or at least one fastening hole (230-Fig.8) widens, preferably conically, from the front side (29) of the wheel to the rear side (123) of the hub connection flange (121).

3. Vehicle wheel according to one of the preceding claims,
**characterized in that** at least one fastening hole (130) has a step (136-Fig.7) between the front side (29) of the wheel and the rear side (123) of the hub connection flange (121) and forms a retaining projection for the retaining means with the undercut formed by the step, wherein preferably the smaller inside diameter (D_{I1}) of the fastening hole (130) in front of the step is at least 0.8 mm, preferably at least 1.5 mm, particularly preferably more than 1.9 mm smaller than the larger inside diameter (D_{I2}) at the step, and/or that the step (136) has a distance (T₁) from the front side of the wheel of at least 1.5 mm.

4. Vehicle wheel according to claim 2 or 3 , **characterized in that** all fastening holes (130, 230) are designed identically to one another and are arranged symmetrically on a common bolt circle, or that several fastening holes (130, 230) are arranged symmetrically on a bolt circle, which have a larger diameter on the rear side (123-Fig.4) than on the front side (129-Fig.4) of the wheel, wherein at least one fastening hole with an internal thread is additionally provided, which is arranged asymmetrically to the fastening holes (130, 230) that widen towards the rear side (123).

5. Vehicle wheel according to one of the preceding claims,
**characterized in that** the centre hole (327) has an inner circle edge which is provided with a constriction (395-Fig.9, 10) as an abutment for a cover-side retaining means acting by form fit, wherein preferably the constriction (395) on the inner circle edge of the centre hole (327) consists of a concentric circumferential taper with which the inner circle edge merges into the rear side (323) of the hub connection flange (321), wherein the taper preferably produces an undercut surface on the inner circle edge, which jumps back circumferentially on the rear side (323) at least 4 mm with respect to the inner diameter of the inner circle.

6. Vehicle wheel according to claim 5, **characterized in that** the constriction on the inner circle edge of the centre hole consists of a groove extending over the inner circumference of the centre hole, wherein the groove is preferably positioned centrally between the front side and the rear side of the hub connection flange.

7. Vehicle wheel according to one of the preceding claims,
**characterized in that** the through holes have a maximum diameter which is smaller than the diameter of the bolt holes in the hub connection flange (121; 221).

8. Vehicle wheel according to one of the preceding claims,
**characterized in that** the outer rim flange (7) has an arcuately curved locking lip on the inside as an abutment for a locking projection (70) or several locking projections on the outer circumference of the aerodynamic wheel disc cover, wherein each locking projection preferably has at least one bead for edging into the locking lip.

9. Aerodynamic wheel disc cover for a vehicle wheel, with an annular cover main body (151) for covering the front side (129, 229) of the vehicle wheel between the centre hole and the outer rim flange (7), and with at least one retaining means interacting with a fastening device on the vehicle wheel, **characterized in that** the vehicle wheel is according to any of claims 1 to 8, and the retaining means (180; 290, 291) is acting by form fit, which is designed to engage in or behind a fastening hole (130; 230) that widens towards the rear side (123, 223) of the hub connection flange (121; 221).

10. Wheel disc cover according to claim 9, **characterized in that** the cover main body (151) has a locking projection (70; 170) or several locking projections on the outer circumference, which are respectively provided with a bead for engaging a locking lip on the outer rim flange of the wheel disc, and/or the cover main body is designed and dimensioned to cover all bolt holes as well as the wheel bolt screws screwed into the bolt holes.

11. Wheel disc cover according to claim 9 or 10,
**characterized in that** the cover main body (151) has several locking pins (180) on its underside, which pins are arranged symmetrically on a bolt circle and which are provided with a hook projection (186-Fig.6) at their lower pin end, wherein each locking pin is preferably designed at least in two parts and the partial elements (181; 182) of the locking pin is pushable apart and/or is pushed together in the radial direction with respect to an initial state, and each locking pin is provided with a centre hole (183) for an actuating means for pushing the partial elements of the locking pin apart.

12. Wheel disc cover according to claim 11, **characterized in that** a cover ring (165) is additionally provided, which comprises on its underside pins (185) projecting beyond the underside, wherein each pin (185) is intended and positioned correspondingly to engage in one of the centre holes of the locking pins (180) on the main body in the mounted state, wherein the cover ring (165) is preferably provided, on the inside of the ring, with a reversibly bendable retaining lip (168) for engaging behind a retaining edge on an inner circumference of the main body (151), and/or wherein the pin (185) is made of metal.

13. Wheel disc cover according to claim 9 or 10,
**characterized in that** the cover main body (350) has a bottom side (355) which is designed as an abutment surface on a front side of a wheel-side hub connection flange (321) and is provided with a reversibly bendable retaining lip (196) which partially protrudes beyond the bottom side (355) and is designed to engage an annular groove on the inner circumference of a wheel-side centre hole of a vehicle wheel or to engage behind a taper on a rear side of an inner circumference of a wheel-side centre hole (327) of a vehicle wheel.

14. Wheel disc cover according to one of claims 9 to 13,
**characterized in that** the cover main body and/or the cover ring are made of plastic and/or that the cover main body is provided with flow guide bodies on the outer circumference for additionally influencing the aerodynamics, in particular with flow guide bodies that are designed to reduce air turbulence.

15. Wheel disc cover according to one of claims 9 to 14,
**characterized in that** the cover main body has a flat or conical end face (153), and preferably has a depression (161) in the end face, wherein preferably the cover ring (165) in the mounted state is filling the depression (161) and lies flush with the end face (153), and/or that the main body of the cover is provided on the outer circumference with a ring-shaped peripheral web (56) with air duct slots, which in the mounted state is positioned axially offset next to the outer rim flange (7).

## Patentansprüche

1. Fahrzeugrad, insbesondere für Nutzfahrzeuge, aufweisend eine metallische Felge (1) mit einem inneren Felgenhorn (2) und einem äußeren Felgenhorn (7), einer inneren Felgenschulter (3) und einer äußeren Felgenschulter (6) sowie einem Felgentiefbett (4) zwischen den Felgenschultern (3, 6), aufweisend eine im Innern der metallischen Felge (1) angeordnete und an die metallische Felge (1) angeschlossene metallische Radschüssel (20), die einen Nabenanschlussflansch (21) mit Mittelloch (27) und mehreren auf einem Lochkreis um eine Radachse angeordneten Bolzenlöchern (22), einen Übergangsbereich (24) und einen Schüsselrand (26) aufweist, wobei der Nabenanschlussflansch (21), der Übergangsbereich (24), das äußere Felgenhorn (7) und die äußere Felgenschulter (6) eine Radvorderseite (29) bilden, und aufweisend eine Befestigungseinrichtung für eine aerodynamische Radschüssel-Abdeckung (5), wobei die die Befestigungseinrichtung mehrere Befestigungslöchern (30) aufweist, **dadurch gekennzeichnet, dass** die Befestigungslöchern (130-Fig 6; 230-Fig 8) im Nabenanschlussflansch (121) angeordnet sind und der Übergangsbereich (24) mit Lüftungslöchern (25) versehenen ist, wobei wenigstens ein Befestigungsloch (130; 230) aus einem Durchgangsloch mit einer Lochachse besteht, symmetrisch zur Lochachse ausgebildet ist, an der Radvorderseite (129) einen kleineren Durchmesser (D_{I1}) aufweist als ein Durchmesser (D_{I2}) an einer Rückseite (123) des Nabenanschlussflansch und ein Widerlager für ein lösbares, durch Formschluss wirkendes Haltemittel bildet.

2. Fahrzeugrad nach Anspruch 1, **dadurch gekennzeichnet, dass** die Befestigungslöcher (130-FIG. 6) symmetrisch auf einem Lochkreis um die Radachse angeordnet sind und/oder dass wenigstens ein Befestigungsloch (230-FIG 8) sich, vorzugsweise konisch, von der Radvorderseite (129) zur Rückseite (123) des Nabenanschlussflansch (121) verbreitert.

3. Fahrzeugrad nach einem der vorhergehenden Ansprüche, **dadurch gekennzeichnet, dass** wenigstens ein Befestigungsloch (130) zwischen Radvorderseite (129) und Rückseite (123) des Nabenanschlussflansch (121) eine Stufe (136-FIG. 7)) aufweist und mit dem durch die Stufe gebildeten Hinterschnitt einen Rückhaltevorsprung für das Haltemittel bildet, wobei vorzugsweise der kleinere Innendurchmesser (D_{I1}) des Befestigungslochs (130) vor der Stufe um wenigstens 0,8 mm, vorzugsweise um wenigstens 1,5 mm, insbesondere vorzugsweise um mehr als 1,9 mm kleiner ist als der größere Innendurchmesser (D_{I2}) an der Stufe, und/oder dass die Stufe (136) einen Abstand (T₁) von der Radvorderseite von wenigstens 1,5 mm aufweist.

4. Fahrzeugrad nach Anspruch 2 oder 3, **dadurch gekennzeichnet, dass** sämtliche Befestigungslöcher (130, 230) zueinander identisch ausgebildet sind und symmetrisch auf einem gemeinsamen Lochkreis angeordnet sind, oder dass mehrere Befestigungslöcher (130, 230) symmetrisch auf einem Lochkreis angeordnet sind, welche Befestigungslöcher an der Rückseite (123- Fig. 4) einen größeren Durchmesser aufweisen als an der Radvorderseite (129-Fig. 4), wobei zusätzlich wenigstens ein Befestigungsloch mit einem Innengewinde vorgesehen ist, welches asymmetrisch zu den sich zur Rückseite (123) verbreiternden Befestigungslöchern (130, 230) angeordnet ist.

5. Fahrzeugrad nach einem der vorhergehenden Ansprüche, **dadurch gekennzeichnet, dass** Mittelloch (327) einen Innenkreisrand aufweist, der mit einer Einziehung (395-Fig 9, 10) als Widerlager für ein abdeckungsseitiges, durch Formschluss wirkendes Haltemittel versehen ist, wobei vorzugsweise die Einziehung (395) am Innenkreisrand des Mittellochs (327) aus einer konzentrisch umlaufenden Abschrägung besteht, mit welcher der Innenkreisrand in die Rückseite (323) des Narbenanschlussflansch (321) übergeht, wobei vorzugsweise die Abschrägung eine Hinterschnittfläche am Innenkreisrand erzeugt, die um wenigstens 4 mm gegenüber dem Innendurchmesser des Innenkreisrand umlaufend an der Rückseite (323) zurückspringt.

6. Fahrzeugrad nach Anspruch 5, **dadurch gekennzeichnet, dass** die Einziehung am Innenkreisrand des Mittellochs aus einer sich über den Innenumfang des Mittellos erstreckenden Nut besteht, wobei die Nut vorzugsweise mittig zwischen Vorderseite und Rückseite der Nabenanschlussflansch positioniert ist.

7. Fahrzeugrad nach einem der vorhergehenden Ansprüche, **dadurch gekennzeichnet, dass** die Durchgangslöcher einen maximalen Durchmesser aufweisen, der kleiner ist als der Durchmesser der Bolzenlöcher im Nabenanschlussflansch (121; 221).

8. Fahrzeugrad nach einem der vorhergehenden Ansprüche, **dadurch gekennzeichnet, dass** das äußere Felgenhorn (7) an der Innenseite eine bogenförmig gewölbte Arretierlippe als Widerlager für einen Riegelvorsprung (70) oder mehrere Riegelvorsprünge am Außenumfang der aerodynamischen Radschüssel-Abdeckung aufweist, wobei vorzugsweise jeder Riegelvorsprung wenigstens einen Wulst zum Einfassen in die Arretierlippe aufweist.

9. Aerodynamische Radschüssel-Abdeckung für ein Fahrzeugrad, mit einem ringförmigen Abdeckungs-Hauptkörper (151) zum Abdecken der Radvorderseite (129; 229) des Fahrzeugrades zwischen dem Mittelloch und dem äußeren Felgenhorn (7), und mit wenigstens einem mit einer Befestigungseinrichtung am Fahrzeugrad zusammenwirkenden Haltemittel, **dadurch gekennzeichnet, dass** das Fahrzeugrad gemäß einem der Ansprüche 1-8 ist, und dass das Haltemittel (180; 290,291) aus einem durch Formschluss wirkenden Haltemittel besteht, welches zum Einfassen in ein Befestigungsloch (130; 230) oder Hinterfassen eines Befestigungslochs (130; 230) ausgebildet ist, welches sich zur Rückseite (123, 223) des Nabenanschlussflansch (121; 221) verbreitert.

10. Radschüssel-Abdeckung nach Anspruch 9, **dadurch gekennzeichnet, dass** der Abdeckungs-Hauptkörper (51; 151) am Außenumfang einen Riegelvorsprung (70; 170) oder mehrere Riegelvorsprünge aufweist, die jeweils mit einem Wulst zum Einfassen in eine Arretierlippe am äußeren Felgenhorn der Radschüssel versehen sind, und/oder dass der Abdeckungs-Hauptkörper ausgebildet und dimensioniert ist, sowohl sämtliche Bolzenlöcher als auch die in die Bolzenlöcher eingeschraubten Radbolzenschrauben zu überdecken.

11. Radschüssel-Abdeckung nach Anspruch 9 oder 10, **dadurch gekennzeichnet, dass** der Abdeckungs-Hauptkörper (151) an seiner Unterseite mehrere symmetrisch auf einem Lochkreis angeordnete Riegelzapfen (180) aufweist, welche Riegelzapfen an ihrem unteren Zapfenende mit einem Hakenvorsprung (186-Fig. 6) versehen sind, wobei vorzugsweise jeder Riegelzapfen wenigstens zweigeteilt ausgeführt ist und die Teileelemente (181; 182) des Riegelzapfens bezogen auf einen Ausgangszustand in Radialrichtung auseinanderschiebbar und/oder zusammenschiebbar sind, und jeder Riegelzapfen mit einem zentralen Loch (183) für ein Betätigungsmittel zum Auseinanderschieben der Teilelemente des Riegelzapfens versehen ist.

12. Radschüssel-Abdeckung nach Anspruch 11, **dadurch gekennzeichnet, dass** zusätzlich ein Abdeckring (165) vorgesehen ist, der an seiner Unterseite mit über die Unterseite vorspringenden Stiften (185) versehen ist, wobei jeder Stift (185) dazu bestimmt ist und entsprechend positioniert ist, in eines der Zentrallöcher der Riegelzapfen (180) am Hauptkörper im Montagezustand einzufassen, wobei vorzugsweise der Abdeckring (165) an der Ringinnenseite mit einer reversibel verbiegbaren Haltelippe (168) zum Hinterfassen einer Haltekante an einem Innenumfang der Hauptkörper (151) versehen ist, und/oder wobei der Stift (185) aus Metall besteht.

13. Radschüssel-Abdeckung nach Anspruche 9 oder 10, **dadurch gekennzeichnet, dass** der Abdeckungs-Hauptkörper (350) eine Bodenseite (355) aufweist, die als Anlagefläche an einer Vorderseite eines radseitigen Nabenanschlussflansch (321) ausgebildet ist, und mit einer reversibel verbiegbaren Haltelippe (196) versehen ist, die über die Bodenseite (355) partiell hinausragt und zum Einfassen in eine Ringnut am Innenkreisumfang eines radseitigen Mittellochs eines Fahrzeugrads oder zum Hinterfassen einer Abschrägung an einer Rückseite eines Innenkreisumfang eines radseitigen Mittellochs (327) eines Fahrzeugrads ausgebildet ist.

14. Radschüssel-Abdeckung nach einem der Ansprüche 9 bis 13, **dadurch gekennzeichnet, dass** der Abdeckungs-Hauptkörper und/oder der Abdeckring aus Kunststoff bestehen, und/oder dass der Abdeckungs-Hauptkörper am Außenumfang mit Strömungsleitkörpern zur zusätzlichen Beeinflussung der Aerodynamik versehen ist, insbesondere mit Strömungsleitkörpern, die ausgelegt sind, Luftturbulenzen zu verringern.

15. Radschüssel-Abdeckung nach einem der Ansprüche 9 bis 14, **dadurch gekennzeichnet, dass** der Abdeckungs-Hauptkörper eine flache oder konische Stirnfläche (153) aufweist, und vorzugsweise eine Vertiefung (161) in der Stirnfläche aufweist, wobei vorzugsweise der Abdeckring (165) im Montagezustand die Vertiefung (161) ausfüllt bündig mit der Stirnfläche (153) liegt, und/oder dass der Abdeckungs-Hauptkörper am Außenumfang mit einem ringförmig umlaufenden, Luftführungsschlitze aufweisenden Randsteg (56) versehen ist, der im Montagezustand axial versetzt neben dem äußeren Felgenhorn (7) positioniert ist.

## Revendications

1. Roue de véhicule, en particulier pour des véhicules utilitaires, présentant une jante métallique (1) dotée d'un rebord intérieur de jante (2) et d'un rebord extérieur de jante (7), d'un épaulement intérieur de jante (3) et d'un épaulement extérieur de jante (6) ainsi que d'un puits de jante (4) entre les épaulements de jante (3,6), présentant un disque métallique de roue (20) agencé à l'intérieur de la jante métallique (1) et relié à la jante métallique (1), le disque métallique de roue (20) présentant une rebord de liaison de moyeu (21) doté d'un trou central (27) et d'une pluralité de trous de boulons (22) agencés sur un cercle de boulons autour d'un axe de roue, une zone de transition (24) et un bord de disque (26), le rebord de liaison de moyeu (21), la zone de transition (21), le rebord extérieur de jante (7) et l'épaulement extérieur de jante (6) formant une face avant (29) de la roue, et présentant un dispositif de fixation pour un coiffe aérodynamique de disque de roue (50),
le dispositif de fixation comprenant plusieurs trous de fixation (30), **caractérisée en ce que** les trous de fixation (130-Fig.6 ; 230-Fig.8) sont agencés dans le rebord de liaison de moyeu (121) et la zone de transition (24) est pourvue de trous de ventilation (25),
dans laquelle au moins un trou de fixation (130 ; 230) consiste en un trou traversant doté d'un axe de trou, est formé de manière symétrique par rapport à l'axe du trou, présente un diamètre (D_{I1}) sur la face avant (129) de la roue inférieur à un diamètre (D_{I2}) sur une face arrière (123) du rebord de liaison de moyeu et forme une butée pour un moyen de retenue amovible agissant par complémentarité de forme.

2. Roue de véhicule selon la revendication 1, **caractérisée en ce que** les trous de fixation (130-Fig.6) sont agencés de manière symétrique sur un cercle de trous autour de l'axe de roue et/ou au moins un trou de fixation (230-Fig.8) s'élargit, de préférence en forme de cône, depuis la face avant (129) de la roue vers la face arrière (123) du rebord de liaison de moyeu (121).

3. Roue de véhicule selon l'une des revendications précédentes, **caractérisée en ce qu'**au moins un trou de fixation (130) présente un gradin (136-Fig.7) entre la face avant (29) de la roue et la face arrière (123) du rebord de liaison de moyeu (121) et forme une saillie de retenue pour le moyen de retenue avec la contre-dépouille formée par le gradin, de préférence le plus petit diamètre intérieur (D_{I1}) du trou de fixation (130) devant le gradin étant inférieur d'au moins 0,8 mm, de préférence d'au moins 1,5 mm, de préférence encore de plus de 1,9 mm au plus grand diamètre intérieur (D_{I2}) au niveau du gradin, et/ou **en ce que** le gradin (136) présente une distance (T₁) par rapport à la face avant de la roue d'au moins 1,5 mm.

4. Roue de véhicule selon la revendication 2 ou 3, **caractérisée en ce que** tous les trous de fixation (130, 230) sont conçus de manière identique les uns aux autres et sont agencés de manière symétrique sur un cercle de boulons commun, ou **en ce que** plusieurs trous de fixation (130, 230) sont agencés de manière symétrique sur un cercle de boulons, lesquels présentent un diamètre plus grand sur la face arrière (123-Fig.4) que sur la face avant (129-Fig.4) de la roue, au moins un trou de fixation doté d'un filetage intérieur étant en outre prévu, lequel est agencé de manière asymétrique par rapport aux trous de fixation (130, 230) s'élargissant vers la face arrière (123).

5. Roue de véhicule selon l'une des revendications précédentes, **caractérisée en ce que** le trou central (327) présente un bord de cercle intérieur qui est pourvu d'un rentrant (395-Fig.9, 10) servant de butée pour un moyen de retenue côté coiffe agissant par complémentarité de forme, le rentrant (395) du bord de cercle intérieur du trou central (327) étant de préférence constitué par un chanfrein circonférentiel concentrique par lequel le bord de cercle intérieur se confond dans la face arrière (323) du rebord de liaison de moyeu (321), le chanfrein produisant de préférence une surface en contre-dépouille sur le bord de cercle intérieur, laquelle recule circonférentiellement sur la face arrière (323) d'au moins 4 mm par rapport au diamètre intérieur du cercle intérieur.

6. Roue de véhicule selon la revendication 5, **caractérisée en ce que** le rentrant sur le bord de cercle intérieur du trou central est constitué par une rainure s'étendant sur la circonférence intérieure du trou central, la rainure étant de préférence centrée entre la face avant et la face arrière du rebord de liaison de moyeu.

7. Roue de véhicule selon l'une des revendications précédentes, **caractérisée en ce que** les trous traversants présentent un diamètre maximal inférieur au diamètre des trous de boulons dans le rebord de liaison de moyeu (121 ; 221).

8. Roue de véhicule selon l'une quelconque des revendications précédentes, **caractérisée en ce que** le rebord extérieur de jante (7) présente, sur la face intérieure, une lèvre de verrouillage courbée en arc servant de butée pour une saillie de verrouillage (70) ou plusieurs saillies de verrouillage sur la circonférence extérieure de la coiffe aérodynamique de disque de roue, chaque saillie de verrouillage présentant de préférence au moins un bourrelet destiné à s'emboîter dans la lèvre de verrouillage.

9. Coiffe aérodynamique de disque roue pour une roue de véhicule, dotée d'un corps annulaire principal de coiffe (151) destiné à couvrir la face avant (129, 229) de la roue de véhicule entre le trou central et le rebord extérieur de jante (7), et dotée d'au moins un moyen de retenue coopérant avec un dispositif de fixation sur la roue de véhicule, **caractérisée en ce que** la roue de véhicule est conforme à l'une quelconque des revendications 1 à 8, et le moyen de retenue (180 ; 290, 291) agit par complémentarité de forme, étant conçu pour s'insérer dans ou derrière un trou de fixation (130 ; 230) qui s'élargit vers la face arrière (123, 223) du rebord de liaison de moyeu (121 ; 221).

10. Coiffe de disque de roue selon la revendication 9, **caractérisée en ce que** le corps principal de coiffe (151) présente, sur la circonférence extérieure, une saillie de verrouillage (70 ; 170) ou plusieurs saillies de verrouillage, chacune étant pourvue d'un bourrelet destiné à s'insérer dans une lèvre de verrouillage sur le rebord extérieur de jante du disque de roue, et/ou le corps principal de coiffe est conçu et dimensionné pour couvrir tous les trous de boulons ainsi que les boulons de roue vissés dans les trous de boulons.

11. Coiffe de disque de roue selon la revendication 9 ou 10, **caractérisée en ce que** le corps principal de coiffe (151) présente, sur sa face inférieure, plusieurs broches de verrouillage (180), les broches étant agencées de manière symétrique sur un cercle de boulons et pourvues, à leur extrémité inférieure de broche, d'une saillie en crochet (186-Fig.6), chaque broche de verrouillage étant de préférence réalisée au moins en deux parties et les éléments partiels (181 ; 182) de la broche de verrouillage pouvant être écartés et/ou rapprochés l'un de l'autre dans la direction radiale par rapport à un état initial, et chaque broche de verrouillage étant pourvue d'un trou central (183) pour un moyen d'actionnement destiné à écarter l'un de l'autre les éléments partiels de la broche de verrouillage.

12. Coiffe de disque de roue selon la revendication 11, **caractérisée en ce qu'**un anneau de coiffe (165) est également fourni, lequel comprend des broches de face inférieure (185) faisant saillie au-delà de la face inférieure, chaque broche (185) étant prévue et positionnée de manière correspondante de façon à s'insérer dans l'un des trous centraux des broches de verrouillage (180) sur le corps principal dans l'état monté, l'anneau de coiffe (165) étant de préférence pourvu, sur la face intérieure l'anneau, d'une lèvre de retenue (168) pliable de manière réversible destinée à s'insérer derrière un bord de retenue sur une circonférence intérieure du corps principal (151), et/ou dans lequel la broche (185) est en métal.

13. Coiffe de disque de roue selon la revendication 9 ou 10, **caractérisée en ce que** le corps principal de coiffe (350) présente une face inférieure (355) conçue comme une surface de butée sur une face avant d'un rebord de liaison de moyeu côté roue (321) et pourvue d'une lèvre de retenue (196) pliable de manière réversible, laquelle fait saillie partiellement au-delà de la face inférieure (355) et est conçue pour s'insérer dans une rainure annulaire sur la circonférence intérieure d'un trou central côté roue d'une roue de véhicule ou pour s'insérer derrière un chanfrein sur une face arrière d'une circonférence intérieure d'un trou central côté roue (327) d'une roue de véhicule.

14. Coiffe de disque de roue selon l'une des revendications 9 à 13, **caractérisée en ce que** le corps principal de coiffe et/ou l'anneau de coiffe sont en plastique et/ou **en ce que** le corps principal de coiffe est pourvu, sur la circonférence extérieure, de corps de guidage d'écoulement destinés à influer de plus sur l'aérodynamique, en particulier de corps de guidage d'écoulement conçus pour réduire les turbulences d'air.

15. Coiffe de disque de roue selon l'une des revendications 9 à 14, **caractérisée en ce que** le corps principal de coiffe présente une face frontale plate ou conique (153) et présente de préférence un renfoncement (161) dans la face frontale, de préférence l'anneau de coiffe (165), dans l'état monté, remplissant le renfoncement (161) et affleurant avec la face frontale (153), et/ou **en ce que** le corps principal de la coiffe est pourvu, sur la circonférence extérieure, d'une bande périphérique annulaire (56) dotée de fentes de passage d'air, laquelle est positionnée, dans l'état monté, axialement décalée et adjacente au rebord extérieur de jante (7).
